**Europäisches Patentamt**

**European Patent Office**

**Office européen des brevets**

(19)

(11) Publication number: **0 114 912**
**B1**

(12) # EUROPEAN PATENT SPECIFICATION

(45) Date of publication of patent specification: **18.03.87**

(51) Int. Cl.⁴: **B 01 D 53/04, C 01 B 21/04**

(21) Application number: **83100817.2**

(22) Date of filing: **28.01.83**

(54) **Novel repressurization for pressure swing adsorption system.**

(43) Date of publication of application:
**08.08.84 Bulletin 84/32**

(45) Publication of the grant of the patent:
**18.03.87 Bulletin 87/12**

(84) Designated Contracting States:
**DE FR GB IT NL**

(56) References cited:
**EP-A-0 055 961**
**EP-A-0 114 911**
**US-E- 29 941**

(73) Proprietor: **CALGON CARBON CORPORATION**
**Route 60 Campbell's Run Road**
**Robinson Township Pennsylvania 15205 (US)**

(72) Inventor: **Vo, Toan P.**
**1251 Fernridge Drive**
**Pittsburgh, Pennsylvania 15211 (US)**

(74) Representative: **Abitz, Walter, Dr.-Ing. et al**
**Abitz, Morf, Gritschneder, Freiherr von**
**Wittgenstein Postfach 86 01 09**
**D-8000 München 86 (DE)**

EP 0114912 B1

Courier Press, Leamington Spa, England.

# 0 114 912

**Description**

This invention relates to an adsorption process for providing a gas stream enriched in at least one component by means of a pressure swing adsorption system using carbon molecular sieves.

The term gaseous mixture, as used herein, refers to air and other gas mixtures primarily comprised of two components of different molecular size. The term enriched gas refers to a gas comprised of the component(s) of the gaseous mixture relatively unadsorbed after passage of the gaseous mixture through an adsorbent that meets a predetermined purity of, for example, from 90 to 99% in one component. The term lean gas refers to that gas exiting from an adsorption zone that fails to meet the purity standard set for the enriched gas. In the case of a two (or more) column adsorption zone, lean gas is that gas passing solely through the last column comprising the zone as well as gas that fails to meet the purity standard set for enriched gas.

A gaseous mixture may be fractionated, or separated, using pressure swing adsorption by passing the mixture at an elevated pressure through a bed of adsorbent which is selective in its capacity to adsorb one or more of the components of the mixture. This selectivity is governed by the pore size distribution in the adsorbent and the pore volume of the proper pore size for adsorption of a particular gas component. Thus, gas molecules with a kinetic diameter less than or equal to the pore size are retained, or adsorbed, on the adsorbent while gas molecules of larger diameters pass through the column. The adsorbent, in effect, sieves the gas according to its molecular size. The gas mixture may also be fractionated because of different rates of diffusion of its components into the pore system of the adsorbent.

As the gas travels through the adsorbent column, the adsorbent pores are filled with gas molecules. One can envision an adsorption front, moving through the column, akin to the liquid adsorption front moving through a solid adsorbent in a column chromatography system. After some time the gas exiting the column is essentially the same in composition as the gas that entered the column of the adsorbent. This is known as the breakthrough point. For example, a gaseous mixture enters the adsorbent, and the identical mixture exits the adsorbent. At some time prior to this breakthrough point, the adsorbent must be regenerated.

After treatment of the gas mixture to adsorb selected components therefrom, the flow of the gaseous mixture through the column is interrupted and the adsorbent is regenerated by purging it of the adsorbed components either by vacuum or by passing through the column, generally in the opposite direction of flow taken by the gaseous mixture (i.e., countercurrently), a purge gas stream which may comprise a portion of the purified product.

Pressure swing adsorption usually includes at least two columns of adsorbent so that while one column is being regenerated, the other is in the adsorption phase producing product gas, that is, the columns interact as two alternating adsorption zones.

More than one column may be employed in an adsorption zone. When more than one column comprises such a zone, the columns may be connected in either a serial or a parallel arrangement. When adsorbent columns are connected in series, gas exiting one column of the zone enters the inlet end of the next column comprising the zone. In a parallel arrangement, the gas mixture enters the inlet end of all columns comprising the zone. Generally, a serial arrangement is preferred for high purification, while a parallel arrangement allows for large quantities of product gas in a short time cycle. As used herein, the term adsorption zone is understood to refer either to a single column zone or a serially arranged two column zone. In either case, each adsorption zone has an inlet end, for example, the inlet of a single column zone is that one column's inlet end and for a two column zone (arranged in series) the inlet end is at the inlet of the first column in the zone. Each adsorption zone has a corresponding outlet end. For the two column zone, this is at the outlet end of the second column comprising the zone. When using two adsorption zones, by cycling (alternating) between these adsorption zones, product gas is obtained constantly.

A known process is the use of carbon molecular sieves for the production of enriched nitrogen from air. See for example, US—A—2,556,859 and US—A—3,960,522. These sieves possess a pore structure with a size comparable to the kinetic diameter of oxygen. When used in a pressure swing adsorption system, these sieves selectively adsorb oxygen from a gas mixture, allowing other components especially nitrogen to pass.

A four column pressure swing adsorption unit has been successfully employed in the separation of hydrogen gas from its mixture with carbon dioxide, water and light aliphatic hydrocarbons. See for example, US—A—3,430,418.

Also known is the fractionation of other binary gas mixtures by pressure swing adsorption. For example, carbon monoxide from its mixture with hydrogen using zeolite 13X and carbon dioxide from its mixture with fuel gas mixtures using charcoal, alumina or silica. See US—A—3,884,661.

Binary gas mixtures of argon and oxygen or helium and methane have been separated on an adsorbent of partially oxidized carbon in a pressure swing adsorption process. See DE—B—2,045,200.

EP—A—0 005 961 discloses a two column pressure swing adsorption process wherein prior to breakthrough the gas mixture exiting from a first adsorption bed is admitted into the inlet end of a second adsorption bed of carbon molecular sieves to partially pressurize the second adsorption bed in the range of about 40 to 90% of the adsorption pressure. The second adsorption bed is then further pressurized to the

2

adsorption pressure by introducing enriched gas into the outlet end of the second adsorption bed while the first adsorption bed is concomitantly vented to atmospheric pressure through its inlet end. The gas mixture is passed through the second adsorption bed to yield enriched gas while the first adsorption bed is regenerated by the application of vacuum to the inlet end of the first bed. This sequence of process steps is repeated prior to breakthrough.

The invention as claimed in claim 1 solves the problem of how to carry out an adsorption process for producing an enriched gas stream which has a high yield of product gas, requires less amount of molecular sieve and is energy efficient.

A gas stream that is 90% to 99% and higher by volume in one component of the gaseous mixture is obtained in large volume by the adsorption process of the invention. The process requires less energy to operate than either cryogenic or other pressures swing adsorption systems, and yet supplies gases of comparable quality. The adsorption process of the invention is especially suitable for providing an inexpensive and high volume source of gases such as nitrogen, hydrogen or methane.

A similar adsorption process is described in EP—A—114 911 (filing date: 28.1.83; publication date: 8.8.84) wherein the second adsorption zone is merely partially pressurized in the range of about 40 to 90% of the adsorption pressure by passing the lean gas from the first adsorption zone into the inlet end of the second adsorption zone and the second adsorption zone is further pressurized to the adsorption pressure by introducing enriched gas from the product reservoir into the outlet end of the second adsorption zone.

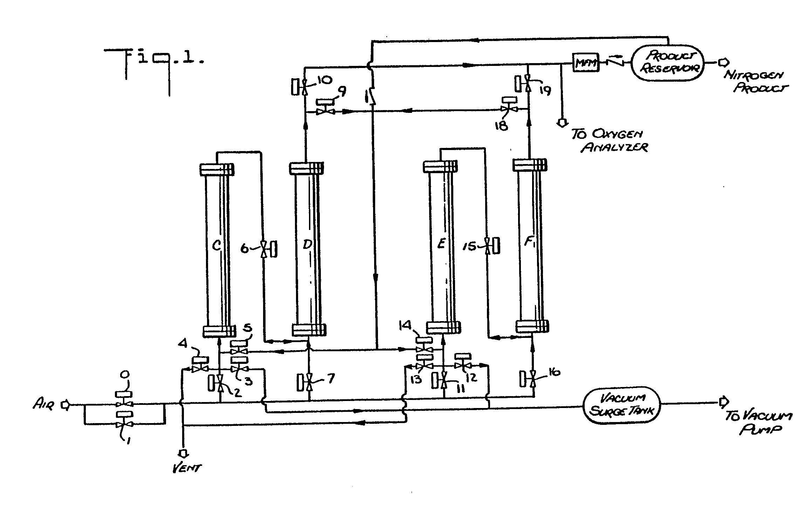

One embodiment of the invention is shown in Fig. 1 which is a schematic representation of a double column adsorption zone apparatus capable of employing the novel repressurization process described therein.

The system for employing the novel repressurization technique of this invention can be better understood by reference to the accompanying drawings which show two pressure swing adsorption units capable of fractionating a gaseous mixture in accordance with this invention. Although the present invention is described and illustrated in connection with two preferred embodiments, it is to be understood that for example, any gaseous mixture including air (nitrogen and oxygen), methane and carbon dioxide, or hydrogen and carbon monoxide will suffice.

Referring to Fig. 1 in detail, there is shown four pressure resistant columns C, D and E and F, each of which is filled with a bed of carbon molecular sieves suitable for the fractionation of nitrogen from air as known from US—A—4,412,529. Columns C and D comprise the first adsorption zone (zone-1) while columns E and F comprise the second adsorption zone (zone-2). Each zone has an inlet end (zone-1=Columns C, zone-2=Column E) and an outlet end (zone-1=Column D, zone-2=Column F).

The series of valves connecting the pressure resistant columns may be defined by the number shown in Fig. 1 and described by the function performed in this second preferred arrangement:

| | | |
|---|---|---|
| (a) | Valves 0 and 1 | — main air flow valves |
| (b) | Valves 2, 7 and 11, 16 | — inlet air valves to columns C, D and E, F respectively. |
| (c) | Valves 3 and 12 | — regeneration valves-vacuum pump for zones 1 and 2 |
| (d) | Valves 4 and 13 | — purge valves—release column pressure for zones 1 and 2 |
| (e) | Valves 10 and 19 | — product flow valves—from adsorption zones 1 and 2 |
| (f) | Valves 9, 14, 15 and 5, 6 and 18 | — exiting (lean) gas connection between outlet of first adsorption zone and inlet of second adsorption zone |
| (g) | Valves 6 and 15 | — zone purge connection—gas from second half of zone used to purge first half. |

While Columns C, D, E and F are shown in the vertical position, they may be installed in either the horizontal or vertical position without adverse effect to the mode of operation.

Ambient air is dried and compressed and introduced into the system via either valve 0 or valve 1. The ambient air may be modified, prior to adsorption, by passing it through a condenser to remove excess humidity as a relative humidity of less than 40% is preferred. Also, a filter or scrubber may be employed to remove other gases such as carbon dioxide, sulfur dioxide or oxides of nitrogen. These steps improve the purity of the exiting gas stream and are employed when the specification for essentially pure enriched gas, (e.g., nitrogen) mandates such prior removal. They are however auxiliary and not requisite to the successful operation of this invention.

Air is admitted to either zone-1 or zone-2 at the desired adsorption pressure of, for example, 7 bars, via valve 0 and either valves 2 and 6 or valves 11 and 15 to selectively sieve oxygen and the feed air is pushed through the adsorption zone. Enriched product nitrogen gas is discharged from zone-1 or zone-2 via either valve 10 or valve 19 respectively. The instantaneous enriched nitrogen flow rate is measured by a mass flow meter and the enriched gas oxygen content is analyzed upstream from the product reservoir. A stream of enriched product nitrogen gas is discharged from the product reservoir at a pressure below that of the adsorption pressure to keep its pressure constant.

When one adsorption zone is generating enriched gas, the other zone is being regenerated by vacuum applied via valves 3 or 12. Thus, while zone-1 is producing nitrogen via open valve 0, 2, 6 and 10, zone-2 is being regenerated by vacuum in the range of 0.1 to 0.3 bar (70 to 250 torr) via open valve 12.

When analysis of the enriched product nitrogen gas oxygen content shows that an undesirable level of oxygen, for example, greater than from 1 to 10 percent, has been reached valves 0, 2, 6, and 10 or valves 0, 11, 15 and 19 are closed. The first column in the adsorption zone (column C or E) is then isolated (closed-off) from the system. Air is then admitted solely into the second column of zone-1 (column D) or zone-2 (column F) via valves 1 and 7 or 1 and 16 respectively. The exiting lean gas from this column flows through either valves 9, 14 and 15 or valves 18, 5 and 6 to the inlet end of zone-2 or zone-1. This lean gas is used to pressurize the other zone to a range of 70—120%, preferably 80 to 105% of the adsorption pressure. After this step the zone is allowed to decrease in pressure by a time delay. The pressure drop occurs due to spontaneous adsorption by the carbon molecular sieves of some of the gas molecules. Generally, this pressure drop occurs in about 2 to 60 seconds. During this time the isolated column of the first adsorption zone is returned to atmospheric pressure by venting through valves 3, 4 or 13. Once the repressurization phase is completed, the second column of the adsorption zone (i.e., Column D, or Column F) is countercurrently depressurized via valve 6 or valve 15 and the previously vented and isolated column (i.e., Column C or Column E) is purged with the residual gas from the second column in the zone. The adsorption zone that has decreased in pressure during the time delay process now receives feed air via valve 0 and either valve 11, 15 or valve 2, 6 and enriched product gas is released via valves 19 or 10. While one adsorption zone is producing enriched nitrogen gas, the other adsorption zone is being regenerated by the application of vacuum in the range of 0.1 to 0.3 bar (70 to 250 torr) via valve 3 or valve 12. The cycle is repeated when the oxygen content of the enriched product gas from the second adsorption zone again reaches a predetermined undesirable level.

**Claims**

1. An adsorption process for producing an enriched gas stream of a predetermined purity which comprises the sequential steps of:
(a) passing a gaseous mixture, at an adsorption pressure selected from the range of from 3.0 to 8.0 bars through a first adsorption zone comprising a first and a last column of carbon molecular sieves arranged in series to yield said enriched gas;
(b) when the enriched gas declines in purity by from 1 to 10 percent below said predetermined purity, passing the gaseous mixture solely through the last column of said first adsorption zone, thereby producing lean gas and passing said lean gas from the outlet end of said first adsorption zone into the inlet end of a second adsorption zone comprising a first and a last column of carbon molecular sieves arranged in series, to pressurize said second adsorption zone in the range of about 70 to 120% of said adsorption pressure, halting said lean gas flow and thereafter isolating said first adsorption column of said first adsorption zone;
(c) allowing said second adsorption zone to decrease in pressure via a time delay process while concomitantly venting said first column of said first adsorption zone to atmospheric pressure through its inlet end, and countercurrently venting said last column of said first adsorption zone and using said vented gas to countercurrently purge the previously vented and isolated first column in said first adsorption zone;
(d) thereafter passing said gaseous mixture through said second adsorption zone at the adsorption pressure to yield enriched gas while regenerating said first adsorption zone by application of vacuum to the inlet end of said first zone in the range of 70 to 250 torr (0.1 to 0.3 bar);
(e) repeating the cycle, treating said second zone as said first zone when the enriched gas purity declines by from 1 to 10 percent below said predetermined purity.
2. The adsorption process of Claim 1 wherein the gaseous mixture is air and the enriched gas is from 90 to 99 percent nitrogen.
3. The adsorption process of Claims 1 or 2 wherein the lean gas is admitted to pressurize the second adsorption zone to about 105% of the adsorption pressure.
4. The adsorption process of Claims 1 or 2 wherein enriched gas purity of below 5 percent of said predetermined purity is lean gas.

**Patentansprüche**

1. Adsorptionsverfahren zur Gewinning eines angereicherten Gasstromes einer vorgegebenen Reinheit mit der Folge von Verfahrensschritten:
(a) ein Gasgemisch wird bei einem Adsorptionsdruck im Bereich von 3,0 bis 8,0 bar durch eine erste Adsorptionszone geleitet, die eine erste und letzte Säule von Kohlenstoff-Molekularsieben enthält, die in der Reihe angeordnet sind, um das angereicherte Gas zu erhalten;
(b) das Gasgemisch nur durch die letzte Säule der ersten Adsorptionszone geleitet wird, wenn das angereicherte Gas in der Reinheit um 1 bis 10 % unter die vorgegebene Reinheit abfällt, wodurch mageres Gas erzeugt wird, und das magere Gas vom Auslaßende der ersten Adsorptionszone in das Einlaßende einer zweiten Adsorptionszone geleitet wird, die eine erste und eine letzte Säule von Kohlenstoff-Molekularsieben aufweist, die in Reihe angeordnet sind, um die zweite Adsorptions-zone mit einem Druck im Bereich von etwa 70 bis 120 % des Adsorptionsdruckes zu beaufschlagen, die Strömung mageren Gases angehalten wird und danach die erste Adsorptionssäule der ersten Adsorptionszone isoliert wird;
(c) der Druck in der zweiten Adsorptionszone wird über ein Zeitverzögerungsverfahren abfallen gelassen, während gleichzeitig die erste Säule der ersten Adsorptionszone über ihr Einlaßende auf Atmosphärendruck entlüftet wird und im Gegenstrom die letzte Säule ersten Adsorptionszone belüftet wird und das belüftete Gas dazu verwendet wird, die zuvor belüftete und isolierte erste Säule in der ersten Adsorptionszone im Gegenstrom zu reinigen;

(d) danach wird das Gasgemisch bei dem Adsorptionsdruck durch die zweite Adsorptionszone geführt, um angereichertes Gas zu gewinnen, während die erste Adsorptionszone durch Anwendung von Unterdruck auf das Einlaßende der ersten Zone im Bereich von 70 bis 250 torr (0,1 bis 0,3 bar) regeneriert wird;

(e) die Schrittfolge wird wiederholt, wenn die Reinheit des angereicherten Gases um 1 bis 10 % unter die vorgegebene Reinheit abfällt, wobie die zweite Zone als die erste Zone behandelt wird.

2. Adsorptionsverfahren nach Anspruch 1, wobei das Gasgemisch Luft ist und das angereicherte Gas 90 bis 99 % Stickstoff ist.

3. Adsorptionsverfahren nach Anspruch 1 oder 2, wobei das magere Gas zugeführt wird, um die zweite Adsorptionszone mit einem Druck von etwa 105 % des Adsorptionsdruckes zu beaufschlagen.

4. Adsorptionsverfahren nach Anspruch 1 oder 2, wobei die Reinheit des angereicherten Gases von unterhalb 5 % dèr vorgegebenen Reinheit mageres Gas ist.

## Revendications

1. Procédé d'adsorption pour produire un courant de gaz enrichi possédant une pureté prédéterminée, qui inclut les phases opératoires successives consistant à:

(a) faire passer un mélange gazeux, à une pression d'adsorption choisie dans la gamme allant de 3,0 à 8,0 bars, à travers une première zone d'adsorption incluant une première et une dernière colonnes de tamis moléculaires en carbone, disposées en série de manière à produire ledit gaz enrichi;

(b) lorsque la pureté du gaz enrichi diminue, d'une valeur comprise entre 1 et 10 pour cent par rapport à ladite pureté prédéterminée, fair passer le mélange gazeux uniquement à travers la dernière colonne de ladite première zone d'adsorption, ce qui fournit un gaz pauvre, et faire passer ledit gaz pauvre depuis l'extrémité de sortie de ladite première zone d'adsorption dans l'extrémité d'entrée d'une seconde zone d'adsorption comprenant une première et une dernière colonnes de tamis moléculaires en carboné, disposées en série, pour pressuriser ladite seconde zone d'adsorption à une pression située dans la gamme comprise entre environ 70 et 120 % de ladite pression d'adsorption, arrêter ledit courant de gaz pauvre et isoler ensuite ladite première colonne d'adsorption de ladite première zone d'adsorption;

(c) laisser la pression de ladite seconde zone d'adsorption diminuer au cours d'un processus de temps d'attente, tout en aérant simultanément ladite première colonne de ladite première zone d'adsorption à la pression atmosphérique par l'intermédiaire de son extrémité d'entrée, et aérer à contre-courant ladite dernière colonne de ladite première zone d'adsorption et utiliser ledit gaz aéré pour purger, à contre-courant, la première colonne précédemment aérée et isolée, située dans ladite première zone d'adsorption;

(d) faire passer ensuite ledit mélange gazeux dans ladite seconde zone d'adsorption à la pression d'adsorption pour produire un gaz enrichi, tout en régénérant ladite première zone d'adsorption en appliquant un vide situé dans la gamme allant de 70 à 250 torrs (0,1 à 0,3 bar) à l'extrémité d'entrée de la dite première zone;

(e) répéter le cycle, en traitant ladite seconde zone comme ladite première zone lorsque la pureté du gaz enrichi diminue, d'une valeur comprise entre 1 et 10 pour cent, par rapport à ladite pureté prédéterminée.

2. Procédé d'adsorption selon la revendication 1, selon lequel le mélange gazeux est de l'air et le gaz enrichi contient entre 90 et 99 pour cent d'azote.

3. Procédé d'adsorption selon la revendication 1 ou 2, selon lequel le gaz pauvre est admis de manière à pressuriser la seconde zone d'adsorption à une pression égale à environ 105 % de la pression d'adsorption.

4. Procédé d'adsorption selon la revendication 1 ou 2, selon lequel le gaz enrichi, dont la pureté est inférieure à 5 pour cent de ladite pureté prédéterminée, est le gaz pauvre.

Fig.1.

Air

Nitrogen Product

Product Reservoir

To Oxygen Analyzer

To Vacuum Pump

Vacuum Surge Tank

Vent

C  D  E  F

1